# EUROPEAN PATENT SPECIFICATION

(11) **EP 2 754 532 B1**
(45) Date of publication and mention of the grant of the patent: **06.04.2016**
(21) Application number: 12829327.1
(22) Date of filing: 04.09.2012
(51) Int. Cl.: B23Q 7/14, B23Q 41/02, B23Q 7/16

(54) **MACHINE TOOL LINE**
WERKZEUGMASCHINENLINIE
LIGNE DE MACHINES-OUTILS

(30) Priority: 05.09.2011 JP 2011192373
(43) Date of publication of application: 16.07.2014
(73) Proprietor: Komatsu NTC Ltd., Nanto-City Toyama 939-1595 (JP)
(72) Inventor: MURAI, Shiro, Nanto-city Toyama 939-1595 (JP); HIROSHIMA, Koji, Nanto-city Toyama 939-1595 (JP); TAKASE, Akira, Nanto-city Toyama 939-1595 (JP)
(74) Representative: Reichert & Lindner Partnerschaft Patentanwälte
(86) International application number: PCT/JP2012/072460
(87) International publication number: WO 2013/035693

(56) References cited:
- EP-A1- 1 712 330
- JP-A- H03 208 536
- JP-A- H04 122 555
- JP-A- H09 155 681
- JP-A- 2007 229 823

## Description

### TECHNICAL FIELD

The present invention relates to a machine tool line of the type known from patent document EP-A-1712330.

### BACKGROUND ART

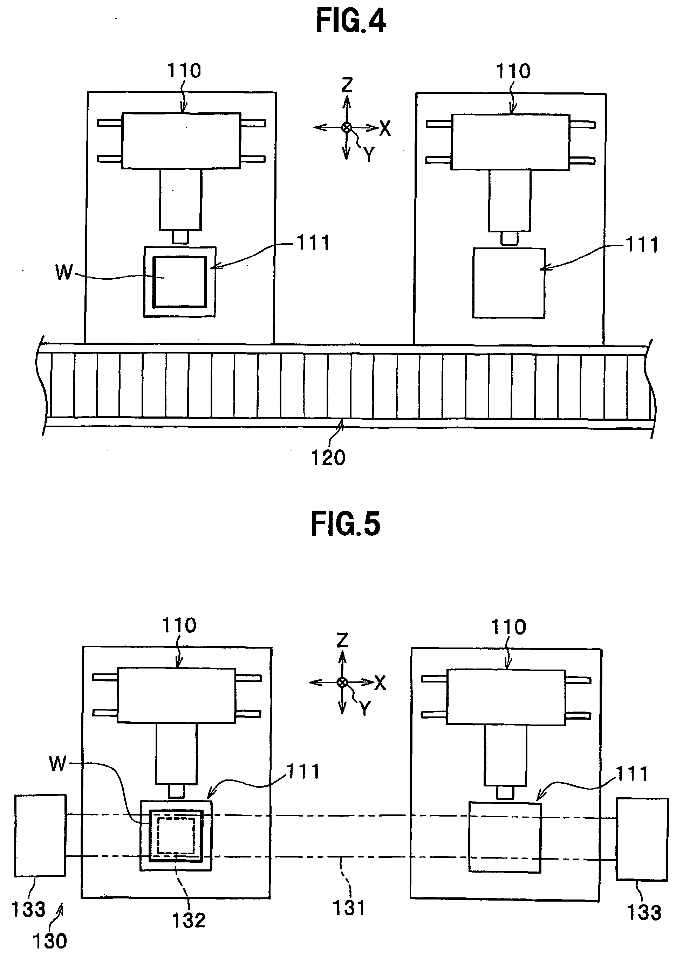

A conventional machine tool line in which a plurality of machine tools are arranged in juxtaposition, and a workpiece is conveyed between the machine tools to be processed sequentially, has a conveyance device 120 disposed in front of the machine tools 110 as shown in Figure 4. The workpiece W is transferred from a workpiece processing position 111 on a machine tool 110 to the conveyance device 120 (Z-direction movement), and then is conveyed toward an adjacent machine tool 110 (X-direction movement) (for example, refer to a patent document 1).

Another machine tool line provided with a gantry type conveyance device 130 as shown in Figure 5, is also known. The gantry type conveyance device 130 is disposed so that a travel guide 131 straddles a plurality of machine tools 110. In the gantry type conveyance device 130, a gripping means 132, which moves along the travel guide 131 (X-direction movement), is configured to go down from over a machine tool 110 to grip a workpiece W, and to convey it toward an adjacent machine tool 110 (for example, refer to a patent document 2).

### PRIOR ART DOCUMENT

### PATENT DOCUMENT

Patent document 1: Japanese Patent Laid-Open Publication No. H7-124851
Patent document 2: Japanese Patent Laid-Open Publication No. 2005-46920

### SUMMARY OF THE INVENTION

### PROBLEMS TO BE SOLVED BY THE INVENTION

However, the machine tool line shown in Figure 4 needs a large width of the line and a wide area for installation because the conveyance device 120 is disposed in front of the machine tools 110. Furthermore, a mechanism (not shown) for transferring a workpiece between the workpiece processing position 111 and the conveyance device 120 is needed, therefore, the number of parts increases and the apparatus becomes complex.

On the other hand, the machine tool line shown in Figure 5 needs a long length in a direction of conveyance to increase an installation area because the gantry type conveyance device 130 needs columns 133 for supporting the travel guide 131 at the both ends of the direction of conveyance.

The present invention is created to solve such problems, and it is an object to provide a machine tool line capable of simplifying and miniaturizing the apparatus.

### MEANS FOR SOLVING THE PROBLEM

In order to solve the problems, the present invention provides a machine tool line including a plurality of machine tools and a conveyance means for conveying a workpiece between the machine tools, wherein the conveyance means includes a plurality of work tables to be positioned at each workpiece-processing position for the machine tools, a temporary holder unit for the workpiece, and a control unit to operate the work tables and the temporary holder unit, wherein the plurality of work tables are individually movable along a direction of conveyance, and a moving range has a common area to overlap with a moving range of an adjacent one of the work tables, wherein the temporary holder unit is capable of holding the workpiece positioned in the common area, and wherein the control unit is configured to move one work table on which the workpiece is placed, of work tables adjacent to each other of the work tables, from a first workpiece-processing position to the common area with the other work table, to temporarily hold the workpiece in the common area with use of the temporary holder unit, to execute retreating of the one work table from the common area and moving the other work table to the common area in which the workpiece is temporarily held, to place the workpiece temporarily held by the temporary holder unit onto the other work table, and to move the other work table to a second workpiece-processing position.

According to this construction, work tables can serve for the conveyance means because of a plurality of work tables individually movable along a direction of conveyance. Hereby, a space for processing a workpiece can be used in common with a conveyance space, so that the whole of the machine tool line can be constructed in small size and an installation space can be largely reduced. The number of parts is decreased by the common use of work tables and the conveyance means, so that the apparatus can be simplified. A length in the direction of conveyance can be shortened because a common area exists within a moving range of a work table. The length in the direction of conveyance can be shortened also in comparison with the machine tool line provided with the gantry type conveyance device because of needlessness of columns like the gantry type conveyance device.

Furthermore, the present invention provides the machine tool line in which the conveyance means includes a stator for a linear motor along the direction of conveyance, and the work tables are provided with movers for the linear motor.

According to this construction, a guide rail can be formed to be an integrated rail lengthened in the direction of conveyance because a work table is moved by using the linear motor, so that the apparatus is simplified. Furthermore, each work table can be fast and individually moved.

### EFFECT OF THE INVENTION

The machine tool line according to the present invention presents a superior effect that the apparatus can be simplified and constructed in small size.

### BRIEF DESCRIPTION OF THE DRAWINGS

FIG. 1 is a schematic plan view showing the whole of a machine tool line according to an embodiment of the present invention;
FIG. 2 is a schematic side view showing the whole of the machine tool line according to the embodiment of the present invention;
FIGs. 3A to 3E are schematic plan views showing a conveying state of a workpiece in the machine tool line according to the embodiment of the present invention;
FIG. 4 is a plan view showing the whole of a conventional machine tool line; and
FIG. 5 is a plan view showing the whole of another conventional machine tool line.

### MODE FOR CARRYING OUT THE INVENTION

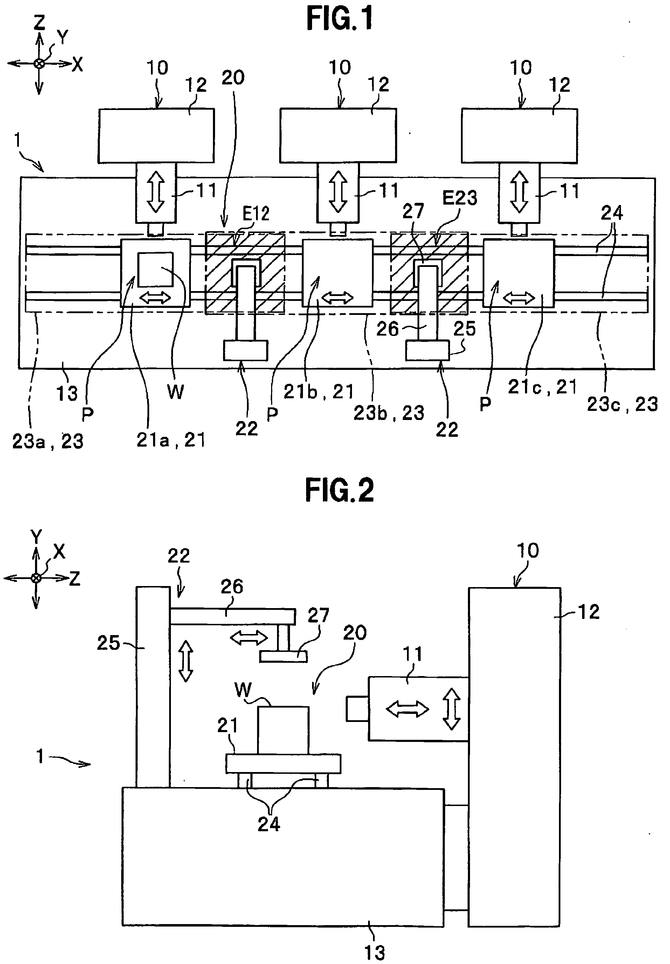

A machine tool line according to an embodiment of the present invention will be explained below. In the present embodiment, an example using a horizontal machine tool will be explained. Further, this does not mean that a machine tool to be adopted is limited to a horizontal machine tool. As shown in Figures 1 and 2, The machine tool line 1 of the present embodiment includes a plurality of machine tools 10, 10······, and a conveyance means 20 for conveying a workpiece W between the machine tools 10, 10······. The number of the machine tools is three in the present embodiment. However, this does not mean that the number of the machine tools is limited to that number, but the number may be plural. Furthermore, the workpiece W is to be conveyed from the left side to the right side in Figure 1 to be sequentially processed. That is, the left side in Figure 1 is an upstream side, and the right side is a downstream side.

A machine tool 10 includes a spindle head 11, a column 12 for supporting the spindle head 11 movably in a Y axis-direction of a vertical direction, a Y axis-feed mechanism (not shown) for moving the spindle head 11 in the Y axis-direction, a Z axis-feed mechanism (not shown) for moving the spindle head 11 in a Z axis-direction of a direction in which the spindle head approaches or retreats from a workpiece W, and a bed 13 for placing the workpiece W thereon. The Y axis-feed mechanism and the Z axis-feed mechanism are constructed, for example, by using a ball screw, a motor and so on.

An upper portion of the bed 13 is a position for processing the workpiece W (hereinafter, occasionally referred to as "workpiece-processing position P"). The bed 13 is integrally formed over workpiece-processing positions P, P, P for the three machine tools 10, 10, 10, so that it is a common bed 13 for the three machine tools 10, 10, 10.

The conveyance means 20 includes a plurality of work tables 21 one of which is disposed at each workpiece-processing position P for a machine tool 10, temporary holder units 22 for a workpiece W, and a control unit (not shown) for operating the work tables 21 and the temporary holder units 22. The plurality of work tables 21, 21, 21 are disposed on the bed 13, respectively, and are configured to be movable individually along the direction of conveyance. The direction of conveyance (X axis-direction) is a direction orthogonal to the Z axis, and parallel to an arranging direction of the machine tools 10, 10, 10. A moving range 23 of each work table 21 has a common area E to overlap with a moving range of an adjacent work table 21.

Specifically, as shown in Figure 1, a moving range 23 (hereinafter, occasionally referred to as "first moving range 23a") of a work table 21 at the left end (upstream side) (hereinafter, occasionally referred to as "first work table 21a") spreads to a position of the upstream side of and near a center work table 21 (hereinafter, occasionally referred to as "second work table 21b") which is positioned at a standard position (workpiece-processing position P). On the other hand, a moving range 23 (hereinafter, occasionally referred to as "second moving range 23b") of the work table 21b spreads up to a position of the downstream side of and near the first work table 21a which is positioned at a standard position (workpiece-processing position P). Hereby, a portion of the downstream side of the first moving range 23a of the first work table 21a overlaps with a portion of the upstream side of the second moving range 23b of the second work table 21b, so that the overlapped portion is a common area E12. Furthermore, "standard position" is a position that, for example, the middle position of a work table 21 is positioned on the plane on which an axis of the spindle head 11 is positioned, and is positioned at the approximate middle position of each moving range 23.

Furthermore, the second moving range 23b of the work table 21b spreads to a position of the upstream side of and near a work table 21 at the right end (downstream side) (hereinafter, occasionally, "third work table 21c") which is positioned at a standard position (workpiece-processing position P). On the other hand, a moving range 23 (hereinafter, occasionally, "third moving range 23c") of the work table 21c spreads up to a position of the downstream side of and near the second work table 21b which is positioned at the standard position (workpiece-processing position P) . Hereby, a portion of the downstream side of the second moving range 23b of the second work table 21b overlaps with a portion of the upstream side of the third moving range 23c of the third work table 21c, so that the overlapped portion is a common area E23.

Each work table 21 moves on the bed 13 by using a linear motor. Specifically, the conveyance means 20 includes a guide rail 24 of a stator for the linear motor along the direction of conveyance, and each work table 21 is provided with a mover (not shown) for the linear motor. The stator is formed, for example, by electromagnets. The guide rail 24 is constructed by fixed electromagnets of the stator arranged in a line. A pair of guide rails 24 are disposed in parallel to each other. The mover is formed by movable electromagnets disposed over the guide rails 24. In a stationary state, a fixed electromagnet is configured to have polarity reverse to a movable electromagnet positioned over the fixed electromagnet (N pole vs. S pole, or S pole vs. N pole). In a moving state, a fixed electromagnet in front of a movable electromagnet in the moving direction is polarized reversely to the front portion of the movable electromagnet, so that the movable electromagnet is attracted forward. In a case where a fixed electromagnet behind the movable electromagnet in the moving direction is polarized to be the same as the rear portion of the movable electromagnet, the movable electromagnet can be strongly moved.

The control unit controls the magnetic force of the movable electromagnets, so that work tables 21 are individually moved to each predetermined position. Furthermore, the control unit can change a moving range 23 of each work table 21 according to control of the magnetic force through the control unit. And further, a work table 21 is moved by the linear motor in the present embodiment, but transfer means is not limited to the linear motor.

As shown in Figures 1 and 2, temporary holder units 22 are disposed at positions facing the common areas E12 and E23, respectively. Each temporary holder unit 22 is configured to be capable of holding a workpiece W positioned at the common area E12 or E23. Each temporary holder units 22 includes a column 25 standing on the bed 13, an arm 26 equipped on the column 25 movably in a vertical direction, and a gripping unit 27 equipped at a front end of the arm 26. The gripping unit 27 is supported by the arm 26 to be movable in the Z axis-direction. A known mechanism type such as a gripping type, or an engaging type for a workpiece W is adopted for the gripping unit 27 in accordance with a shape of the workpiece W to be held.

The control unit is configured to temporarily hold a workpiece W conveyed to the common area E12 or E23, to lift it up from an upstream work table 21, to wait at the position, and then to place it onto a downstream work table 21 came up from a workpiece-processing position P for the next process, which position the workpiece is to be conveyed to.

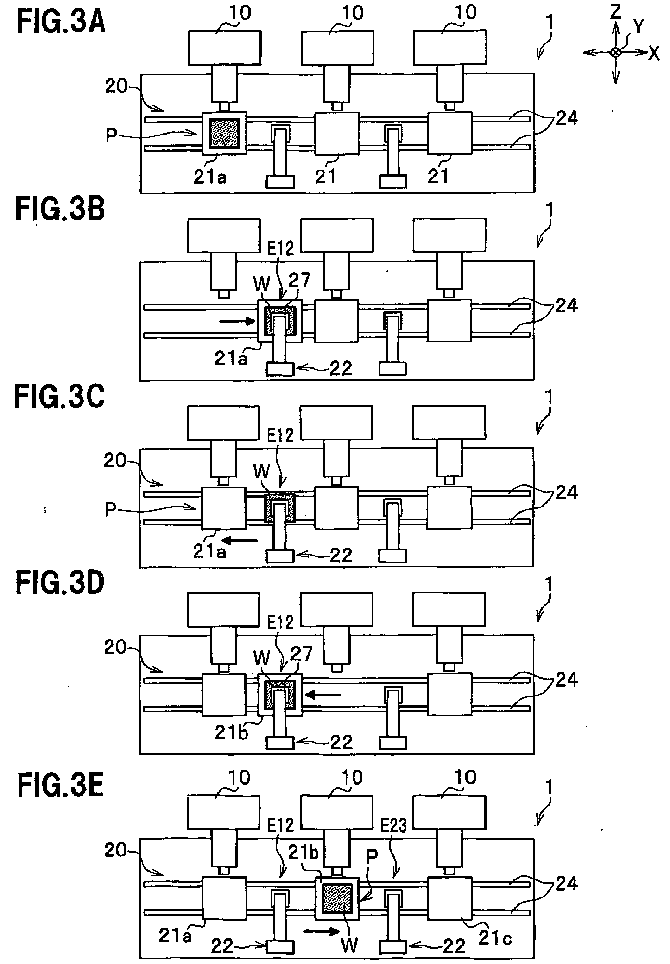

Next, conveyance steps with use of the conveyance means 20 will be explained with reference to Figure 3.

First, after processing with use of the machine tool 10 positioned at the left end in the Figure is finished, the first work table 21a (refer to Figure 3A) positioned at the workpiece-processing position P is moved to the common area E12 as shown in Figure 3B. At this time, the first work table 21a can rapidly move along the guide rails 24 through the linear motor, and can move separately and independently of movements of the other work tables 21. After that, the temporary holder unit 22 is operated, so that the gripping unit 27 holds the workpiece W to lift it up temporarily (temporary holding).

After that, the first work table 21a is returned to the standard position (workpiece-processing position P for the machine tool 10 positioned at the left end) while the workpiece W being temporarily held, as shown in Figure 3C. And then, the second work table 21b is moved to the common area E12 as shown in Figure 3D. Furthermore, the first work table 21a and the second work table 21b may be moved simultaneously. After that, the temporary holder unit 22 is operated to cease holding the workpiece W with use of the gripping unit 27, so that the workpiece W is placed onto the second work table 21b. After the workpiece W is fixed to the second work table 21b, the second work table 21b together with the workpiece W is returned to the standard position (workpiece-processing position P for the machine tool 10 positioned at the center) as shown in Figure 3E.

The conveyance operation for the workpiece W is completed by the above steps. Conveyance operation for the workpiece W between the machine tool 10 positioned at the center and the machine tool 10 positioned at the right end is also carried out by steps like the above steps. Furthermore, if steps are carried out in reverse order of the above steps, the workpiece W can be returned to a machine tool 10 on the upstream side from a machine tool 10 on the downstream side.

According to the above-mentioned machine tool line 1, the work tables 21 to be provided separately from a conveyance device in the conventional art, can serve as the conveyance means 20 because a plurality of work tables 21, 21, ···seach of which is independently movable in the direction of conveyance are provided. Hereby, a space for processing a workpiece and a space for conveying the same are made common, so that a width of the machine tool line 1 becomes small, therefore, the whole of the machine tool line 1 becomes compact so that a large reduction of an installation space can be achieved. And, the number of parts is decreased by the common use of a work table 21 and the conveyance means 20, so that the apparatus can be simplified. Furthermore, there exist the common areas E12 and E23 in the moving range 23 of the work tables 21, so that the length in the direction of conveyance can be shortened although the work tables 21 can move in wide ranges. The length in the direction of conveyance can be shortened also in comparison with the machine tool line provided with the gantry type conveyance device 130 because of needlessness of columns 133 like the gantry type conveyance device 130 (refer to Figure 5).

Furthermore, since the work tables 21 are configured to be movable and the common areas E12 and E23 are provided, a workpiece W can be processed even if it has a long length. That is, even if the workpiece W has a shape with a long length which protrudes out of a work table 21, the protruded portion can be positioned in front of a machine tool 10 when the work table 21 is moved to the common area E12 or E23. Therefore, the protruded portion can be processed. And the length in the direction of conveyance can be shortened because of overlapping of moving ranges of work tables 21, although a length of a workpiece capable of being processed is long.

And furthermore, the temporary holder units 22 are placed so as to face the common areas E12 and E23, and a work table 21 placed with a workpiece W thereon in a common area E12 or E23 moves in the X axis-direction of the direction of conveyance. Therefore, a temporary holder unit 22 is configured so that the gripping unit 27 is capable of moving only in the Y axis-direction and the Z axis-direction, and does not need to move in the direction of conveyance. Hereby, a temporary holder unit 22 can be simplified.

Furthermore, in the present embodiment, since each work table 23 is moved by the linear motor, each work table 23 can be moved fast and individually. And furthermore, the guide rail 24 can be formed in the form of one piece long in the direction of conveyance, so that the guide rail 24 can be easily installed and the conveyance means 20 can be simplified. Furthermore, the linear motor is used, so that a simple structure can be adopted in comparison with a case of adopting ball screws. Specifically, in the case where work tables are moved individually through the ball screws, the same number of ball screws and motors for driving the ball screws as the number of the movable work tables 23 are needed, but in the case of the linear motor, only a pair of guide rails 24 are needed and movers have only to be provided, respectively.

Furthermore, according to the machine tool line 1 of the present embodiment, the spindle head 11 of a machine tool 10 has only to move in the Y axis-direction and the Z axis-direction, so that a mechanism for feeding in the X axis-direction can be omitted. Therefore, the apparatus can be further simplified.

The embodiment of the present invention has been explained in the above. But the present invention is not limited to that embodiment, and appropriate modifications of design can be done within the range of purport of the present invention. For example, the bed 13 for the plurality of machine tools 10 is formed in one body in the present embodiment. But the present invention is not limited to this, hence, each machine tool may be provided with a bed so that adjacent beds are connected to each other. In this case, guide rails provided on each bed are also connected with an adjacent guide rails linearly. Thus, a machine tool and a bed are integrated, so that a machine tool line can be easily formed by using a desired number of machine tools. And a length of a bed is the same each other, so that there is no necessity for preparing beds having a plurality of lengths, and it has versatility.

### DESCRIPTION OF THE SYMBOLS

- 1: Machine tool line
- 10: Machine tool
- 20: Conveyance means
- 21: Work table
- 22: Temporary holder unit
- 23: Moving range
- E12: Common area
- E23: Common area
- P: Workpiece-processing position
- W: Workpiece

## Claims

1. A machine tool line (1) including a plurality of machine tools (10) and a conveyance means (20) for conveying a workpiece (W) between the machine tools (10),
wherein the conveyance means (20) includes a plurality of work tables (21) to be positioned at each workpiece-processing position (P) for the machine tools (10), a temporary holder unit (22) for the workpiece (W), and a control unit to operate the work tables (21) and the temporary holder unit (22),
wherein the plurality of work tables (21) are individually movable along a direction of conveyance, and a moving range has a common area (E12, E23) to overlap with a moving range (23), of an adjacent one of the work tables (21),
wherein the temporary holder unit (22) is capable of holding the workpiece (W) positioned in the common areas (E12, E23) and
wherein the control unit is configured to move one work table (21) on which the workpiece (W) is placed, of work tables (21) adjacent to each other of the work tables (21), from a first workpiece-processing position (P) to the common area (E12, E23) with the other work table (21), to temporarily hold the workpiece (W) in the common area (E12, E23) with use of the temporary holder unit (22), to execute retreating of the one work table (21) from the common area (E12, E23) and moving the other work table (21) to the common area (E12, E23) in which the workpiece (W) is temporarily held, to place the workpiece (W) temporarily held by the temporary holder unit (22) onto the other work table (21), and to move the other work table (21) to a second workpiece-processing position (P).

2. The machine tool line (1) according to claim 1, wherein the conveyance means (20) includes a stator for a linear motor along the direction of conveyance, and the work tables (21) are provided with movers for the linear motor.

## Patentansprüche

1. Werkzeugmaschinenlinie (1), die eine Vielzahl von Werkzeugmaschinen (10) und ein Fördermittel (20) zum Befördern eines Werkstücks (W) zwischen den Werkzeugmaschinen (10) umfasst,
wobei das Fördermittel (20) eine Vielzahl von Arbeitstischen (21) zum Positionieren an jeder Werkstückbearbeitungsposition (P) der Werkzeugmaschinen (10) beinhaltet, eine Einheit zum vorübergehenden Halten (22) des Werkstücks (W) und eine Steuereinheit zum Bedienen der Arbeitstische (21) und der Einheit zum vorrübergehenden Halten (22),
wobei die Vielzahl der Arbeitstische (21) individuell in einer Förderrichtung verschiebbar ist, und ein Bewegungsbereich einen gemeinsamen Bereich (E12, E23) aufweist, der mit einem Bewegungsbereich (23) eines daneben liegenden Arbeitstisches (21) überlappt,
wobei die Einheit zum vorübergehenden Halten (22) das Werkstück (W) in dem gemeinsamen Bereich (E12, E23) positioniert halten kann, und
wobei die Steuereinheit dazu konfiguriert ist, einen der Arbeitstische (21) der nebeneinander liegenden Arbeitstische (21), auf dem das Werkstück (W) liegt, von einer ersten Werkstückbearbeitungsposition (P) zum gemeinsamen Bereich (E12, E23) mit dem anderen Arbeitstisch (21) zu verschieben, um das Werkstück (W) vorrübergehend in dem gemeinsamen Bereich (E12, E23) unter Verwendung der Einheit zum vorrübergehenden Halten (22) zu halten, um das Entfernen des einen Arbeitstisches (21) aus dem gemeinsamen Bereich (E12, E23) durchzuführen und den anderen Arbeitstisch (21) zum gemeinsamen Bereich (E12, E23) zu bewegen, in dem das Werkstück (W) vorrübergehend gehalten wird, um das von der Einheit zum vorrübergehenden Halten (22) vorrübergehend gehaltene Werkstück (W) auf den anderen Arbeitstisch (21) zu legen und den anderen Arbeitstisch (21) in eine zweite Werkstückbearbeitungsposition (P) zu bewegen.

2. Werkzeugmaschinenlinie (1) nach Anspruch 1, wobei das Fördermittel (20) einen Motorständer für einen Linearmotor entlang der Förderrichtung umfasst und die Arbeitstische (21) mit Movers für den Linearmotor ausgestattet sind.

## Revendications

1. Une ligne de machines-outils (1) incluant une pluralité de machines-outils (10) et un moyen de transport (20) pour convoyer une pièce à usine (W) entre les machines-outils (10),
dans laquelle le moyen de transport (20) inclut une pluralité de tables de travail (21) pour être positionnée sur chaque position de traitement des pièces à usiner (P) pour les machines-outils, une unité de support temporaire (22) pour la pièce à usiner (W) et une unité de contrôle pour commander les tables de travail (21) et l'unité de support temporaire (22),
dans laquelle la pluralité des tables de travail (21) peuvent être déplacées individuellement le long du sens de transport, et une plage de déplacement possède une zone commune (E12, E23) pour chevaucher une plage de déplacement (23) de l'une des tables de travail adjacentes (21),
dans laquelle l'unité de support temporaire (22) est capable de support la pièce à usiner (W) positionnée dans la zone commune (E12, E23) et,
dans laquelle l'unité de contrôle est configurée pour déplacer une table de travail (21), sur laquelle la pièce à usiner (W) est placée, des tables de travail (21) adjacentes à chacune des autres tables de travail (21) d'une première position de traitement de la pièce à usiner (P) vers la zone commune (E12, E23) avec l'autre table de travail (21) pour supporter temporairement la pièce à usiner (W) dans la zone commune (E12, E23) avec l'aide de l'unité de support temporaire (22) pour retraiter la table de travail (21) de la zone commune (E12, E23) et déplacer l'autre table de travail (21) vers la zone commune (E12, E23), dans laquelle la pièce à usiner (W) est temporairement tenue pour placer la pièce à usiner (W) temporairement tenue par l'unité de support temporaire (22) sur l'autre table de travail (21) et déplacer l'autre table de travail (21) vers une seconde position de traitement de la pièce à usiner (P).

2. La ligne de machines-outils (1) selon la revendication 1, dans laquelle le moyen de transport (20) inclut un stator pour un moteur linéaire le long du sens de transport et les tables de travail (21) sont équipées de déplaceurs pour le moteur linéaire.
